# EUROPEAN PATENT SPECIFICATION

(11) **EP 3 320 040 B1**
(45) Date of publication and mention of the grant of the patent: **22.03.2023**
(21) Application number: 16821818.8
(22) Date of filing: 29.06.2016
(51) Int. Cl.: C08L 27/16, C08L 27/18, C08L 33/08, C09D 127/16, C09D 127/18

(54) **COMPOSITIONS BASED ON SEMI-CRYSTALLINE FLUORINATED POLYMER AND NUCLEATING AGENT USEFUL FOR PREPARING HIGH GLOSS COATINGS**
ZUSAMMENSETZUNG AUF DER BASIS VON TEILKRISTALLINEM FLUORIERTEM POLYMER UND NUKLEIERUNGSMITTEL ZUR HERSTELLUNG HOCHGLÄNZENDER ÜBERZÜGE
COMPOSITIONS À BASE D'UN POLYMÈRE FLUORÉ SEMI-CRISTALLIN ET D'UN AGENT DE NUCLÉATION UTILES POUR LA PRÉPARATION DE REVÊTEMENTS À BRILLANCE ÉLEVÉE

(30) Priority: 09.07.2015 US 201562190414 P
(43) Date of publication of application: 16.05.2018
(73) Proprietor: Arkema, Inc., King of Prussia, PA 19406 (US)
(72) Inventor: ZHENG, Min, Berwyn, Pennsylvania 19312 (US); WOOD, Kurt A., Abington, Pennsylvania 19001 (US); YEN, Jeffrey H., Woolwich Township, New Jersey 0885 (US); DURALI, Mehdi, Carlsbad, CA 92009 (US); GABOURY, Scott, Blue Bell, Pennsylvania 19422 (US)
(74) Representative: Arkema Patent
(86) International application number: PCT/US2016/039928
(87) International publication number: WO 2017/007645

(56) References cited:
- EP-A2- 1 295 904
- EP-A2- 1 679 352
- WO-A1-97/03140
- WO-A1-03/014240
- WO-A1-2005/071022
- WO-A1-2006/086081
- WO-A1-2012/064841
- WO-A1-2015/031569
- WO-A1-2015/042555
- US-A- 6 017 639
- US-A1- 2005 032 968
- US-A1- 2005 032 968
- US-A1- 2011 021 698
- US-A1- 2013 122 309

## Description

### Field of the Invention

The present invention pertains to blends of semi-crystalline fluorinated polymer and nucleating agent, coating compositions based on a semi-crystalline fluorinated polymer, a nucleating agent and, optionally, an acrylic polymer, to methods of making such coating compositions, and to coatings having improved gloss made from such coating compositions.

### Background of the Related Art

Compositions useful for forming coatings on substrate surfaces are known in the art which utilize a semi-crystalline fluorinated polymer, a nucleating agent and an acrylic polymer. See, for example, U.S. Pat. Pub. No. 2005/0032968. The coatings thereby obtained have advantageous attributes, including the ability to protect the underlying substrate surface from the weather and/or corrosive substances.

However, it would be desirable to develop ways to further improve the quality of such coatings, in particular their glossiness and surface appearance.

### Summary of the Invention

It has now been discovered that the gloss of a coating obtained from a composition comprised of a particulate semi-crystalline fluorinated polymer and a nucleating agent (optionally in combination with an acrylic polymer) may be increased by reducing the particle size of the particulate semi-crystalline fluorinated polymer. That is, a smaller semi-crystalline fluorinated polymer particle size has been found to result in an enhancement of the glossiness of the cured coating produced by baking the composition following application of the composition as a layer onto the surface of a substrate.

One embodiment of the invention provides a blend useful for formulating a coating composition, wherein the blend comprises, consists essentially of, or consists of:
a) a semi-crystalline fluorinated polymer in the form of particles having an MV particle size of not more than 5 microns (in other embodiments, not more than 4 microns, not more than 3 microns, not more than 2 microns, or not more than 1 micron); and
b) a nucleating agent.

The blend may be comprised of from 0.01 to 10 % by weight of nucleating agent, based on the total weight of nucleating agent and semi-crystalline fluorinated polymer. The semi-crystalline fluorinated polymer may be, for example, a homopolymer of vinylidene difluoride or a copolymer of vinylidene difluoride and at least one comonomer selected from the group consisting of fluorinated ethylenic monomers, non-fluorinated ethylenic monomers and non-fluorinated dienes. In certain embodiments of the invention, an acrylic polymer may optionally be present; the acrylic polymer may be a polymer of monomers which include one or more monomers selected from the group consisting of methyl (meth)acrylate, ethyl (meth)acrylate and butyl(meth)acrylate. The particles of semi-crystalline fluorinated polymer may have an MV particle size of not more than 4 microns. The nucleating agent may, for example, be a tetrafluoroethylene homopolymer or a copolymer of tetrafluoroethylene and at least one fluorinated ethylenic monomer. The nucleating agent may have a melting point greater than that of the semi-crystalline fluorinated polymer and/or may be in the form of particles having an MV particle size of not more than 5 microns. In one embodiment, the semi-crystalline fluorinated polymer has a melt viscosity of at least 2000 Pa.s (20 Kps) at 100 s⁻¹, as measured by ASTM D3825 at 232°C.

In other embodiments, the present invention provides a coating composition comprised of, consisting essentially of, or consisting of:
a) a semi-crystalline fluorinated polymer in the form of particles having an MV particle size of not more than 5 microns (in other embodiments, not more than 4 microns, not more than 3 microns, not more than 2 microns, or not more than 1 micron);
b) a nucleating agent; and
c) (optionally) an acrylic polymer.

The coating composition may, in certain embodiments, be additionally comprised of at least one latent solvent for the semi-crystalline fluorinated polymer. In other embodiments, the coating composition may be in the form of a dry powder (i.e., a powder coating, the composition being a free-flowing dry powder) or in the form of an aqueous latex.

In one embodiment, the coating composition is additionally comprised of at least one pigment. In another embodiment, the coating composition is free of pigment and is capable of providing a clear coat.

The coating composition, in certain embodiments of the invention, may contain an amount of nucleating agent of from 0.01 to 10 % by weight or from 0.05 to 5 % by weight, based on the total weight of nucleating agent and semi-crystalline fluorinated polymer.

In various embodiments of the invention, the semi-crystalline fluorinated polymer may be a homopolymer of vinylidene difluoride; a copolymer of vinylidene difluoride and at least one comonomer selected from the group consisting of fluorinated ethylenic monomers, non-fluorinated ethylenic monomers and non-fluorinated dienes; or a copolymer of vinylidene difluoride and 0.1 to 20 mol % in total of at least one monomer selected from the group consisting of vinyl fluoride, hexafluoropropylene, trifluoroethylene, chlorotrifluoroethylene and tetrafluoroethylene.

The acrylic polymer, in certain embodiments of the invention, may be a polymer of one or more monomers selected from the group consisting of methyl(meth)acrylate,ethyl(meth)acrylate and butyl (meth)acrylate, optionally in combination with one or more other monomers.

In other embodiments of the invention, the nucleating agent may be a tetrafluoroethylene homopolymer or a copolymer of tetrafluoroethylene and at least one fluorinated ethylenic monomer. The nucleating agent may have a melting point greater than that of the semi-crystalline fluorinated polymer.

Also provided by the present invention is a coating on a substrate, wherein the coating has been produced from a coating composition in accordance with any one of the above-mentioned embodiments.

The present invention, in another aspect, provides a method of making a coating composition, comprising blending a latex of a semi-crystalline fluorinated polymer with a latex of a nucleating agent to obtain a blend, coagulating the blend to obtain a coagulated blend, drying the coagulated blend to obtain a powder, milling the powder to achieve particles having an MV particle size of not more than 5 microns, and, optionally, blending the milled particles with an acrylic polymer and, optionally, a latent solvent for the semi-crystalline fluorinated polymer.

The present invention, in another aspect, provides a method of making a coating composition, comprising blending a latex of a semi-crystalline fluorinated polymer with a latex of a nucleating agent to obtain a "master-batch" blend, coagulating the blend to obtain a coagulated blend, drying the coagulated blend to obtain a master-batch powder, optionally milling the master-batch powder to achieve particles having an MV particle size of not more than 5 microns, and blending the master-batch powder or milled particles with an additional quantity of semi-crystalline fluorinated polymer powder milled to achieve particles having an MV particle size of not more than 5 microns, and, optionally, one or both of an acrylic polymer and a latent solvent for the semi-crystalline fluorinated polymer.

A method of making a coating on a substrate is additionally provided by the present invention, the method comprising a stage of baking a substrate covered with a coating composition in accordance with any one of the above-mentioned embodiments.

### Detailed Description of the Invention

One component of the coating compositions of the present invention is a semi-crystalline fluorinated polymer having an MV particle size of not more than 5 microns. In other embodiments, the MV particle size of the semi-crystalline fluorinated polymer is not more than 4 microns, not more than 3 microns, not more than 2 microns or even not more than 1 micron. Reducing the MV particle size of the semi-crystalline fluorinated polymer has been found to lead to improvements in the gloss of a coating obtained from a coating composition containing the semi-crystalline fluorinated polymer, an optional acrylic polymer and a nucleating agent. A greater distinctness of image (DOI) may also be attained.

The term "MV particle size" as used herein refers to the mean diameter in microns of the "volume distribution," representing the center of gravity of the particle size distribution. Thus, the MV value may be considered to be the volume average particle size. Mie or modified Mie calculations are used to calculate the distribution. Implementation of the equation used to calculate MV shows it to be weighted (strongly influenced) by a change in the volume amount of large particles in the distribution. MV thus is one type of average particle size or central tendency. MV particle size is measured using a Microtrac S3500 particle size analyzer that employs three precisely placed red laser diodes to characterize particles by utilizing the proven theory of Mie compensation for spherical particles and the proprietary principle of modified Mie calculations for non-spherical particles. The Microtrac S3500 particle size analyzer is capable of measuring particle sizes from 0.02 to 2800 microns.

The semi-crystalline fluorinated polymer is advantageously a vinylidene difluoride homopolymer or a copolymer of vinylidene difluoride with one or more fluorinated ethylenic monomers and/or one or more non-fluorinated ethylenic compounds and/or one or more non-fluorinated diene, monomers which are copolymerizable with vinylidene difluoride. The fluorinated ethylenic monomer is advantageously chosen from vinyl fluoride, hexafluoropropylene, trifluoroethylene, chlorotrifluoroethylene, tetrafluoroethylene, tetrafluoropropylene, trifluoropropylene or hexafluoroisobutylene, the non-fluorinated ethylenic monomer is advantageously chosen from the group consisting ofmethacrylic acid, itaconic acid, maleic acid, malonic acid, acrylic acid, vinyl acetate, vinyl phosphonic acid, vinyl sulfonic acid, .and vinyl ethers, and the non-fluorinated diene is advantageously chosen from the group consisting of butadiene, isoprene and chloroprene. The semi-crystalline fluorinated polymer is advantageously a copolymer of vinylidene difluoride with from 0.1 to 20 mol % of vinyl fluoride or hexafluoropropylene or trifluoroethylene or chlorotrifluoroethylene or tetrafluoroethylene. In another embodiment, however, the semi-crystalline fluorinated polymer is a vinylidene difluoride homopolymer.

To improve the solvent resistance of the coating produced from the coating composition, it generally will be desirable to employ a semi-crystalline fluorinated polymer having a relatively high molecular weight, as measured by melt viscosity at 232°C, 100 s⁻¹ (ASTM D3835). For improved solvent resistance , the preferred melt viscosity is greater than 700 Pa.s (7 Kps (Kilopoise) melt viscosity at 232°C, 100 s⁻¹ (ASTM D3835), more preferably 1000-2500 Pa.s (10-25 Kps) melt viscosity at 232°C, 100 s⁻¹ (ASTM D3835) , most preferably 1500-2000 Pa.s (15-20 kPs) melt viscosity at 232°C, 100 s⁻¹ (ASTM D3835). Polymer melt viscosity values higher than 2500 Pa.s (25 Kps) generally are not preferred, however, because they can lead to coatings having lower gloss in certain applications, such as fast bake coil coatings for example. Conversely, if high solvent resistance is less important in a particular application, semi-crystalline fluorinated polymers having melt viscosities of less than 700 Pa.s (7 kPs) at 232°C, 100 s⁻¹ (ASTM D3835) may also be used, which have the potential of achieving coatings having even higher gloss values.

Any suitable technique may be employed to achieve particles of the semi-crystalline fluorinated polymer having the desired MV characteristics. Milling processes may be used, in particular processes using jet mills, such as those available from the Fluid Energy Processing and Equipment Company, Telford, Pennsylvania, U.S.A.

The nucleating agent component also contributes to improvements in the appearance of the coatings obtained from the coating compositions described therein. That is, a consistent increase in gloss may only be attained, independent of baking conditions and film thickness, when both the MV particle size of the semi-crystalline fluorinated resin is not greater than 5 microns and a nucleating agent is present in the coating composition. Suitable nucleating agents are described, for example, in U.S. Pat. Pub. No. 2005/0032968.

The nucleating agent may be in the form of particles having a melting point greater than that of the semi-crystalline fluorinated polymer, and in embodiments of the invention involving coating compositions, preferably also a melting point greater than the bake temperature employed in any subsequent baking of the coating composition. The particles advantageously have a size (MV) of 0.05 microns to 5 microns and preferably have a size of 0.05 microns to 0.5 microns. This is because a very fine particle size of the nucleating agent promotes a higher rate of crystallization during the cooling of the semi-crystalline fluorinated polymer.

An amount of nucleating agent is present in the coating composition which is effective to achieve the desired level of improvement in the surface appearance of the coating obtained by baking a layer of the coating composition on a substrate surface. In various embodiments of the invention, for example, the coating composition comprises at least 0.01, at least 0.05 or at least 0.1 % by weight nucleating agent based on the total weight of nucleating agent and semi-crystalline fluorinated polymer. In other embodiments, the amount of nucleating agent present in the coating composition does not exceed 10 % by weight, does not exceed 5 % by weight, or does not exceed 3 % by weight, based on the total weight of nucleating agent and semi-crystalline fluorinated polymer. The coating composition, in certain embodiments of the invention, may contain an amount of nucleating agent of from 0.01 to 10 % by weight, from 0.05 to 5 % by weight, or from 0.1 to 3 % by weight, based on the total weight of nucleating agent and semi-crystalline fluorinated polymer.

The nucleating agent may be added either to the semi-crystalline fluorinated polymer or to the optional acrylic polymer modifier or else to a blend of these two polymers. The semi-crystalline fluorinated polymer and the optional acrylic polymer modifier, during this addition, can be in the form of a powder or of an aqueous dispersion or alternatively of a dispersion in a latent solvent for the semi-crystalline fluorinated polymer.

In one particularly advantageous embodiment of the invention, a latex of the semi-crystalline fluorinated polymer and a latex of the nucleating agent are combined to form a blend, which is then coagulated to obtain a coagulated blend. The coagulated blend may then be dried to obtain a powder and the powder then milled to achieve particles having a desired MV particle size (e.g., an MV value of not more than 5 microns). The particles may then optionally be blended with an acrylic polymer and/or a latent solvent for the semi-crystalline fluorinated polymer or with water.

In one embodiment of the invention, a "master batch" is prepared which is a blend of semi-crystalline fluorinated polymer and nucleating agent, the nucleating agent being present in an amount higher than that normally employed in a coating composition. This master batch can then be combined with additional semi-crystalline fluorinated polymer and optional acrylic polymer (along with possibly other ingredients such as solvent and/or pigment), to provide the desired coating composition. In one embodiment, the additional semi-crystalline fluorinated polymer is in the form of particles having an MV particle size greater than 5 microns. In another embodiment, however, the additional semi-crystalline fluorinated polymer is in the form of particles having an MV particle size of not more than 5 microns.

The nucleating agent, preferably in the form of a latex, is advantageously a tetrafluoroethylene homopolymer or a copolymer of tetrafluoroethylene with a fluorinated ethylenic compound. For example, the nucleating agent, preferably in the form of a latex, may be advantageously chosen from crystalline fluorinated polymers with a melting point greater than that of the semi-crystalline fluorinated polymer of the formulation. The nucleating agent may be chosen, for example, from tetrafluoroethylene homopolymers or copolymers of tetrafluoroethylene with a compound comprising fluorinated ethylenic unsaturation. It is preferably chosen from a tetrafluoroethylene homopolymer or a copolymer of tetrafluoroethylene comprising from 0.1 to 20 mol % of vinylidene fluoride, vinyl fluoride, hexafluoropropylene, trifluoroethylene, chlorotrifluoro-ethylene or hexafluoroisobutylene or alternatively from poly(ethylene-co-tetrafluoroethylene) (ETFE), poly-(tetrafluoroethylene-co-perfluorovinyl ethers) (PFA) and irradiated PVDF.

The optionally present acrylic polymer (acrylic modifier) may be advantageously chosen from homopolymers and copolymers of one or more methyl or ethyl esters of acrylic acid and/or of methacrylic acid, optionally with other polymerizable unsaturated monomers chosen from: other alkyl or hydroxyalkyl esters of acrylic acid or of methacrylic acid, such as butyl acrylate, 2-ethylhexyl acrylate, hydroxyethyl acrylate, hydroxyethyl methacrylate, hydroxybutyl acylate, or hydroxypropyl methyacrylate; styrenes, such as styrene or α-methylstyrene; nitriles, such as acrylonitrile and methacrylonitrile; vinyls, such as vinyl acetate or vinyl chloride, with the additional condition that the methyl and/or ethyl acrylate and/or the methyl and/or ethyl methacrylate represent, by weight, at least 70% of the total weight of the said acrylic polymer. The acrylic polymer is advantageously obtained by polymerization of one or more of the following monomers: methyl acrylate, methyl methacrylate, ethyl acrylate, ethyl methacrylate, butyl acrylate and butyl methacrylate, optionally in combination with one or more additional comonomers. Copolymers of methylmethacrylate and ethyl acrylate, such as the product sold under the tradename Paraloid^{®} B44S by the Dow Chemical, are particularly advantageous. The acrylic polymer may, for example, have a weight average molecular weight of from 20,000 to 250,000 daltons. The acrylic polymer may also contain functionality allowing it to be crosslinked with an added crosslinker. For instance, it may contain hydroxy (-OH) functionality, allowing it to be crosslinked with an aminoplast or melamine-type crosslinker.

In advantageous embodiments of coating compositions in accordance with the present invention, the semi-crystalline fluorinated polymer /acrylic polymer ratio by weight is from 50/50 to 95/5, e.g., from 65/35 to 85/15 or from 60/40 to 80/20.

The present invention also comprises a process for the preparation of a dry formulation, starting from the compositions of the invention, wherein a latex of the semi-crystalline fluorinated polymer is blended with the nucleating agent, in that the blend obtained is then coagulated and dried in order to recover a powder, which is then blended with the optional acrylic polymer and optionally other additives, such as fillers, colorants (pigments), antistatic agents, dispersants, stabilizers, coupling agents, anti-fogging agents and/or processing aids, by extrusion at a temperature of 150°C to 280°C. The extrudate is cooled before being milled to give a fine powder, wherein the milling is conducted under conditions effective to provide a powder having an MV particle size of not more than 5 microns (alternatively, not more than 4 microns, not more than 3 microns, not more than 2 microns, or not more than 1 micron).

The present invention also provides formulations obtained from the above-described compositions comprised of small particle size semi-crystalline fluorinated polymer, nucleating agent and, optionally, acrylic polymer, wherein such compositions are combined with one or more additional components such as a liquid medium (e.g., a latent solvent or water), colorants (pigments), antistatic agents, dispersants, processing aids.

Thus, for example, by blending a semi-crystalline fluorinated polymer latex with a latex of the nucleating agent, then coagulating and drying the blend obtained in order to recover a powder, then milling the powder to achieve a desired small particle size (e.g., an MV particle size not more than 5 microns) and then blending this milled powder with the optional acrylic polymer and optionally other additives, such as fillers, colorants (pigments) or processing aids, by dispersing these components in a latent solvent, a coating composition is obtained which is characterized in that it comprises a latent solvent for the semi-crystalline fluorinated polymer of the composition.

One or more organic solvents capable of acting as a latent solvent for the semi-crystalline fluorinated polymer may be employed in the coating compositions of the present invention; that is, the semi-crystalline fluorinated polymer is substantially insoluble and dispersed in the solvent at room temperature but becomes solvated or dissolved in the solvent when the composition is heated.

In some instances, it may be preferable to choose a solvent (e.g., a phthalate) that will not be totally volatilized under the baking conditions used, so that the residual solvent remaining in the film can act as a plasticizer. For other applications, it may be preferable to choose a solvent that will be essentially completely volatilized under the baking conditions employed. In one embodiment, the solvent has a boiling point at atmospheric pressure of from 170°C to 400°C.

Solvents useful in the invention include, but are not limited to, glycol ethers (e.g., monoalkyl and aryl ethers of ethylene glycol, propylene glycol, diethylene glycol, dipropylene glycol, the alkyl or aryl group being methyl, ethyl, n-propyl, isopropyl, butyl, phenyl, glycerol esters, glycol esters, esters (e.g., butyrates) of other aliphatic polyols, phthalates, adipates, benzoates, azelates, carbonates, trimellitates, phosphates, citrates, stearates, sebacates, glutarates, oleates, alkyds, polymeric esters, epoxidized oils, epoxy tallates, amide-esters, sulfonamides, terpenes, aromatics and ketones, esters of aliphatic dibasic acids and di- or triesters of aliphatic polyols and monoesters of alkyleneoxy ethers.

Other exemplary suitable solvents for use in the present invention include polyol diesters, such as triethylene glycol bis(2-ethylhexanoate) (TEG-EH), and esterified ethers, e.g., esters of glycol monoethers such as propylene glycol methyl ether acetate (PMA), dipropylene glycol methyl ether acetate (DPMA), ethylene glycol methylether acetate and diethylene glycol ethyl ether acetate.

Other exemplary useful solvents which may be present to some extent as part of the solvent portion of the present compositions include phthalates such as butyl benzyl phthalate and dialkyl phthalates (e.g., di(2-ethylhexyl) phthalate, dimethyl phthalate and dioctyl phthalate); aromatics such as toluene and xylenes; ketones such as isophorone; aliphatic dibasic acid esters such as dioctyl azelate, diisodecyl adipate and di(2-ethylhexyl) sebacate; phosphates such as trioctyl phosphate and 2-ethylhexyl diphenyl phosphate; epoxy plasticizers such as epoxidized soybean oil, epoxidized tall oil fatty acid 2-ethylhexyl esters, and other conventional polyester solvents commonly employed as plasticizers.

The amount of latent solvent employed in the coating composition may be varied as may be desired in order to influence the properties and characteristics of the coating composition and the coatings obtained therefrom. For example, in various embodiments of the invention latent solvent (which may be either a single solvent or a mixture of solvents) may comprise 35 to 85 % by weight, 40 to 80 % by weight, or 45 to 75 % by weight, of the coating composition.

Analogously to the above-described coating compositions containing latent solvent, a coating composition may be prepared which comprises water as an agent for dispersing the solid particulate components of the composition. One suitable process for obtaining this type of coating composition involves blending a semi-crystalline fluorinated polymer latex with a latex of the nucleating agent, coagulating the blend obtained, drying the coagulated blend to recover a powder, and milling the recovered powder to attain the desired particle size (e.g., an MV particle size not more than 5 microns). This milled powder is then optionally blended with the acrylic polymer and optionally other additives, such as fillers, colorants (pigments) and/or processing aids and the blend dispersed in water.

An alternative way of preparing coating compositions in accordance with the present invention is to process a semi-crystalline fluorinated polymer to attain an MV particle size of not more than 5 microns (by milling, in particular by air milling) and then combine the particulate semi-crystalline fluorinated polymer with the other components of the composition. During such processing, the semi-crystalline fluorinated polymer may be in either dry or latex form. For example, where the coating composition is to be applied to a substrate surface in dry powder form or in combination with a latent solvent, the particle size reduction may be carried out while the semi-crystalline fluorinated polymer is in dry form. Where the coating composition is to be applied to a substrate surface in latex form (i.e., as a dispersion in water), the particle size reduction may be carried out while the semi-crystalline fluorinated polymer is in latex form.

In yet another embodiment of the invention, the semi-crystalline fluorinated polymer may be combined with one or more or all of the desired additional components of the coating composition and then subjected to processing (e.g., milling) under conditions effective to reduce the particle size of the semi-crystalline fluorinated polymer to 5 microns or less.

If the particles of semi-crystalline fluorinated polymer exhibit a tendency to agglomerate, it may be advantageous to combine the components of the coating composition and carry out a homogenization procedure or other such procedure in which the coating composition is subjected to high shear mixing, in order to break up such agglomerates, prior to applying the coating composition to a substrate surface.

The present invention also relates to the coatings obtained from the above formulations. Such coatings have an overall semi-crystalline fluorinated polymer/nucleating agent/(optional) acrylic polymer composition substantially identical to that of the starting composition which was employed. Each of these coatings may be characterized in that it is in the form of a continuous film covering the substrate with strong adhesion and high gloss.

The present invention also comprises a process for obtaining a coating from one of the above coating compositions, wherein the process comprises a stage of baking the substrate covered with the formulation at a temperature T which is high enough to produce a liquid phase comprising the semi-crystalline fluorinated polymer and in which the nucleating agent remains at least partially in the form of solid crystalline seeds, this temperature T being below the melting temperature of the nucleating agent, and a cooling stage (in which the semi-crystalline fluorinated polymer may at least partially crystallize with the formation of spherulites with a size of less than 5 microns). The baking temperature may range, for example, from 150°C to 275°C. If the coating composition comprises a latent solvent, such baking is effective to remove at least a portion of the latent solvent (as previously mentioned, a portion of the latent solvent may be retained in the coating after baking and serve as a plasticizer for the coating). Similarly, if the coating composition is in the form of an aqueous latex, such baking typically removes substantially all of the water initially present.

A coating capable of being obtained by the baking and the cooling of a substrate covered with the coating composition of the present invention may thus be obtained, characterized in that it is in the form of a continuous film which adheres to the substrate while covering it, this film comprising semi-crystalline fluorinated polymer spherulites with a size of less than 5 microns, and in that the composition of this film is overall the same as the composition used in the preparation of the formulation (except, of course, for any volatile components such as volatile latent solvent or water which may be removed during the baking). Such coatings have the advantages of being stable over time and of being glossier than the coatings obtained from similar compositions without a nucleating agent and containing semi-crystalline fluorinated polymer having an MV particle size greater than 5 microns.

The coating compositions of the invention may be applied to a substrate by means known in the art, including but not limited to brushing, bar coating, roll coating, inkjet application and spraying, as well as powder coating. The coating may be applied to one, or more sides of the substrate. The substrate is generally metallic, including but not limited to aluminum, hot dipped galvanized steel, and zinc-aluminum alloys on steel. Two or more coats of the coating composition may be added, and the metal may be cleaned, pretreated and/or physically or chemically primed prior to coating. Following application of the coating composition, the substrate is heated to cure the coating composition and form a tough film. The coating compositions of the present invention may be formulated so as to provide coil coating and/or spray formulations.

Where large rolls of thin gauge metal are to be coated, it is advantageous to apply the coating composition via a coil coating process, such as reverse roll coating. When the coating is carried out using such a process, the coated metal substrate is typically cured by heating for 10 to 50 seconds at a temperature of 200°C to 300°C. If a spray coating process is used, the resulting film is usually cured by heating for 10 to 15 minutes at a temperature of 210°C to 270°C. The baking temperatures are not critical, but must be high enough to cause the semi-crystalline fluorinated polymer particles in the coating composition to coalesce into a continuous film.

The coatings thereby obtained have improved gloss, high organic solvent resistance and very good flexibility.

In a further embodiment of the invention, the coating composition of the present invention may be utilized as a top coat, with one or more other layers of coating (which may or may not be in accordance with the present invention) being formed on the surface of a substrate prior to application of the top coat. One or more base coats thus may be present between the substrate surface and a top coat formed from a coating composition in accordance with the present invention. The base coat(s) may be pigmented and the top coat may be clear (unpigmented).

### Examples

The following examples are intended to illustrate further various aspects of the present invention, but are not intended to limit the scope of the invention in any aspect.

Paint formulations (coating compositions) were prepared in accordance with the formulations shown below:

**TABLE 1**

| | Coil Formulation 1 | Coil Formulation 2 | Coil Formulation 3 | Coil Formulation 4 |
|---|---|---|---|---|
| PVDF Resin | 30 | 20.5 | 22.1 | 22.1 |
| Paraloid^{®} B44S (40% in toluene) | 28 | 21.9 | 23.6 | 23.6 |
| DuPont R960 TiO₂ | - | 15.8 | - | - |
| Shepherd Black 10C909 | - | - | 13.5 | - |
| Shepherd Green 30C612 | - | - | - | 13.5 |
| Isophorone | 32 | 41.8 | 40.8 | 40.8 |
| Xylene | 10 | - | - | - |

**TABLE 2**

| | Spray formulation 1 | Spray formulation 2 | Spray formulation 3 |
|---|---|---|---|
| PVDF Resin | 22.3 | 25.2 | 25.2 |
| Paraloid^{®} B44S (40% in toluene) | 25 | 27 | 27 |
| DuPont R960 TiO₂ | 18 | - | - |
| Shepherd Black 10C909 | - | 15.4 | - |
| Shepherd Green 30C612 | - | - | 15.4 |
| Carbitol Acetate (diethylene glycol ethyl ether acetate) | 24.9 | 25.1 | 25.1 |
| Dimethyl Phthalate | 10.6 | 10.6 | 10.6 |
| Ethylene glycol methyl ether acetate | 24.9 | 25.1 | 25.1 |

As will be described subsequently, the PVDF resins used in the formulations were either nucleated (with PTFE) or non-nucleated. Paraloid^{®} B44S is an acrylic resin sold by Dow Chemical.

The above paint formulations were then cast on chromated aluminum AA3003 panels using wire-wrapped draw down rods (#52). The resulting panels from coil formulations were baked at 307°C (585°F) for 45 seconds followed by quench with cold water. The panels from spray formulations were baked at 238°C (460°F) for 10 minutes followed by air cooling.

Gloss was read using a HunterLab ProGloss 3 (Geometry 60°). The particle size distribution of PVDF powders was tested using a Microtrac S3500 particle size analyzer. The sample for the PSD measurement is prepared by adding 0.5g PVDF powder into 2ml Triton^{®} X-100 surfactant (10% solution in water) in a 100ml glass beaker and mixing the surfactant and powder thoroughly and dispersing in ~60ml of DI water, followed by ultrasonic for 30 s with an external ultrasonic probe. The nucleated PVDF resins were prepared by physically blending latex (98-99.9 part 30% PVDF latex (wherein the PVDF is a homopolymer of vinylidene difluoride having a melt viscosity of 3000 Pa.s (30 Kps) at100 s⁻¹, as measured by ASTM D3835 at 232°C) and 0.05-1 part 60% PTFE latex) followed by isolating and drying. The non-nucleated PVDF resins contained only the homopolymer of vinylidene difluoride. The resulting tested PVDF samples contained nucleation % in the range of 0-2% based on total PVDF weight. The samples were then milled to the desired particle size.

**TABLE 3**

| Gloss value @ 60° of tested formulations | | | | | | | | | | |
|---|---|---|---|---|---|---|---|---|---|---|
| | | Nucleation (%) | MV (µm) | Coil formulations | | | | Spray formulations | | |
| | | | | 1 | 2 | 3 | 4 | 1 | 2 | 3 |
| Comparative examples | PVDF 1 | 0 | 5.20 | 57 | 38 | 44 | 32 | 34 | 28 | 40 |
| | PVDF 2 | 0 | 2.80 | 78 | 47 | 55 | 51 | 33 | 28 | 40 |
| | PVDF 3 | 2 | 7.16 | 48 | 31 | 38 | 31 | 39 | 46 | 57 |
| Working examples (invention) | PVDF 4 | 0.1 | 2.73 | 81 | 48 | 66 | 57 | 47 | 53 | 66 |
| | PVDF 5 | 0.2 | 2.78 | 82 | 51 | 64 | 60 | 51 | 58 | 66 |
| | PVDF 6 | 0.3 | 2.72 | 81 | 56 | 64 | 61 | 56 | 61 | 68 |
| | PVDF 7 | 1 | 2.69 | 82 | 59 | 66 | 58 | 62 | 60 | 70 |
| | PVDF 8 | 2 | 4.22 | 81 | 67 | 71 | 57 | 63 | 64 | 60 |
| | PVDF 9 | 2 | 2.60 | 85 | 71 | 74 | 63 | 68 | 68 | 69 |

A significant gloss was seen with the nucleated PVDF samples having smaller particle size (MV <5 µm) in all tested formulations including both coil and spray applications. Thus, to achieve a higher gloss, the combination of particle size with MV <5 µm and nucleation with 0.1% PTFE was concluded to be sufficient for potentially universal application across a range of formulations.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

## Claims

1. A coating composition comprised of:
a) a semi-crystalline fluorinated polymer in the form of particles having an MV particle size of not more than 5 µm (microns), the MV value being the volume average particle size, wherein the volume distribution is determined using the Mie or modified Mie calculations, said MV particle size being measured using a Microtrac S3500 particle size analyzer;
b) a nucleating agent; and
c) optionally, an acrylic polymer,
wherein the semi-crystalline fluorinated polymer is a homopolymer of vinylidene difluoride or a copolymer of vinylidene difluoride and at least one comonomer selected from the group consisting of fluorinated ethylenic monomers, non-fluorinated ethylenic monomers and non-fluorinated dienes,
wherein said particles are a milled powder,
wherein the nucleating agent is in the form of particles having an MV particle size of not more than 5 µm (microns), the MV value being the volume average particle size, wherein the volume distribution is determined using the Mie or modified Mie calculations, said MV particle size being measured using a Microtrac S3500 particle size analyzer, according to the procedure set out in the description, and
wherein the nucleating agent is a tetrafluoroethylene homopolymer or a copolymer of tetrafluoroethylene and at least one fluorinated ethylenic monomer.

2. The coating composition of claim 1, wherein the coating composition is additionally comprised of at least one latent solvent for the semi-crystalline fluorinated polymer.

3. The coating composition of claim 1, wherein the coating composition is in the form of a dry, free-flowing powder.

4. The coating composition of claim 1, wherein the coating composition is in the form of an aqueous latex.

5. The coating composition of claim 1, wherein the coating composition is additionally comprised of at least one pigment.

6. The coating composition of claim 1, wherein the coating composition is comprised of from 0.01 to 10 % by weight of nucleating agent, based on the total weight of nucleating agent and semi-crystalline fluorinated polymer.

7. The coating composition of claim 1, wherein the acrylic polymer is present and the acrylic polymer is a polymer of monomers which include one or more monomers selected from the group consisting of methyl (meth)acrylate, ethyl (meth)acrylate and butyl(meth)acrylate.

8. The coating composition of claim 1, wherein the particles have an MV particle size of not more than 4 µm (microns).

9. The coating composition of claim 1, wherein the nucleating agent has a melting point greater than that of the semi-crystalline fluorinated polymer.

10. The coating composition of claim 1, wherein the semi-crystalline fluorinated polymer has a melt viscosity of at least 7 Kps at 100 s⁻¹, as measured by ASTM D3835 at 232°C.

11. A coating on a substrate, wherein the coating has been produced from a coating composition in accordance with claim 1.

12. A method of making a coating composition, comprising blending a latex of a semi-crystalline fluorinated polymer with a latex of a nucleating agent to obtain a blend, coagulating the blend to obtain a coagulated blend, drying the coagulated blend to obtain a powder, milling the powder to achieve particles having an MV particle size of not more than 5 microns, and, optionally, blending the milled particles with an acrylic polymer, the MV value being the volume average particle size, wherein the volume distribution is determined using the Mie or modified Mie calculations, said MV particle size being measured using a Microtrac S3500 particle size analyzer.

13. The method of claim 12, wherein the milled particles are additionally blended with a latent solvent for the semi-crystalline fluorinated polymer.

14. A method of making a coating on a substrate, comprising a stage of baking a substrate covered with a coating composition in accordance with claim 1.

## Patentansprüche

1. Beschichtungszusammensetzung, bestehend aus:
a) einem teilkristallinen fluorierten Polymer in Form von Teilchen mit einer MV-Teilchengröße von nicht mehr als 5 µm (Mikron), wobei es sich bei dem MV-Wert um die volumenmittlere Teilchengröße handelt, wobei die Volumenverteilung unter Verwendung der Mie- oder modifizierten Mie-Berechnungen bestimmt wird, wobei die MV-Teilchengröße auf einem Teilchengrößenanalysator des Typs Microtrac S3500 gemessen wird;
b) einem Nukleierungsmittel und
c) gegebenenfalls einem Acrylpolymer,
wobei es sich bei dem teilkristallinen fluorierten Polymer um ein Homopolymer von Vinylidendifluorid oder ein Copolymer von Vinylidendifluorid und mindestens einem Comonomer aus der Gruppe bestehend aus fluorierten ethylenischen Monomeren, nichtfluorierten ethylenischen Monomeren und nichtfluorierten Dienen handelt,
wobei es sich bei den Teilchen um ein gemahlenes Pulver handelt,
wobei das Nukleierungsmittel in Form von Teilchen mit einer MV-Teilchengröße von nicht mehr als 5 µm (Mikron) vorliegt, wobei es sich bei dem MV-Wert um die volumenmittlere Teilchengröße handelt, wobei die Volumenverteilung gemäß der in der Beschreibung angegebenen Verfahrensweise unter Verwendung der Mie- oder modifizierten Mie-Berechnungen bestimmt wird, wobei die MV-Teilchengröße auf einem Teilchengrößenanalysator des Typs Microtrac S3500 gemessen wird; und
wobei es sich bei dem Nukleierungsmittel um ein Tetrafluorethylen-Homopolymer oder ein Copolymer von Tetrafluorethylen und mindestens einem fluorierten ethylenischen Monomer handelt.

2. Beschichtungszusammensetzung nach Anspruch 1, wobei die Beschichtungszusammensetzung zusätzlich aus mindestens einem latenten Lösungsmittel für das teilkristalline fluorierte Polymer besteht.

3. Beschichtungszusammensetzung nach Anspruch 1, wobei die Beschichtungszusammensetzung in Form eines trockenen, frei fließenden Pulvers vorliegt.

4. Beschichtungszusammensetzung nach Anspruch 1, wobei die Beschichtungszusammensetzung in Form eines wässrigen Latex vorliegt.

5. Beschichtungszusammensetzung nach Anspruch 1, wobei die Beschichtungszusammensetzung zusätzlich aus mindestens einem Pigment besteht.

6. Beschichtungszusammensetzung nach Anspruch 1, wobei die Beschichtungszusammensetzung aus 0,01 bis 10 Gew.-% Nukleierungsmittel, bezogen auf das Gesamtgewicht von Nukleierungsmittel und teilkristallinem fluoriertem Polymer, besteht.

7. Beschichtungszusammensetzung nach Anspruch 1, wobei das Acrylpolymer vorliegt und es sich bei dem Acrylpolymer um ein Polymer von Monomeren, die ein oder mehrere Monomere aus der Gruppe bestehend aus Methyl(meth)acrylat, Ethyl(meth)acrylat und Butyl-(meth)acrylat enthalten, handelt.

8. Beschichtungszusammensetzung nach Anspruch 1, wobei die Teilchen eine MV-Teilchengröße von nicht mehr als 4 µm (Mikron) aufweisen.

9. Beschichtungszusammensetzung nach Anspruch 1, wobei das Nukleierungsmittel einen höheren Schmelzpunkt als das teilkristalline fluorierte Polymer aufweist.

10. Beschichtungszusammensetzung nach Anspruch 1, wobei das teilkristalline fluorierte Polymer eine Schmelzeviskosität von mindestens 7 Kps bei 100 s⁻¹ gemäß Messung nach ASTM D3835 bei 232°C aufweist.

11. Beschichtung auf einem Substrat, wobei die Beschichtung aus einer Beschichtungszusammensetzung gemäß Anspruch 1 hergestellt wurde.

12. Verfahren zur Herstellung einer Beschichtungszusammensetzung, umfassend das Mischen eines Latex eines teilkristallinen fluorierten Polymers mit einem Latex eines Nukleierungsmittels unter Erhalt einer Mischung, das Koagulieren der Mischung unter Erhalt einer koagulierten Mischung, das Trocknen der koagulierten Mischung unter Erhalt eines Pulvers, das Mahlen des Pulvers unter Erhalt von Teilchen mit einer MV-Teilchengröße von nicht mehr als 5 Mikron und gegebenenfalls das Mischen der gemahlenen Teilchen mit einem Acrylpolymer, wobei es sich bei dem MV-Wert um die volumenmittlere Teilchengröße handelt, wobei die Volumenverteilung unter Verwendung der Mie- oder modifizierten Mie-Berechnungen bestimmt wird, wobei die MV-Teilchengröße auf einem Teilchengrößenanalysator des Typs Microtrac S3500 gemessen wird.

13. Verfahren nach Anspruch 12, wobei die gemahlenen Teilchen zusätzlich mit einem latenten Lösungsmittel für das teilkristalline fluorierte Polymer gemischt werden.

14. Verfahren zur Herstellung einer Beschichtung auf einem Substrat, umfassend eine Stufe des Brennens eines mit einer Beschichtungszusammensetzung gemäß Anspruch 1 bedeckten Substrats.

## Revendications

1. Composition de revêtement composée de :
a) un polymère fluoré semi-cristallin sous la forme de particules possédant une taille de particule MV de pas plus de 5 µm (microns), la valeur MV étant la taille moyenne de particule en volume, la distribution volumique étant déterminée en utilisant les calculs de Mie ou de Mie modifiés, ladite taille de particule MV étant mesurée en utilisant un analyseur de taille de particule Microtrac S3500 ;
b) un agent de nucléation ; et
c) éventuellement, un polymère acrylique ;
le polymère fluoré semi-cristallin étant un homopolymère de difluorure de vinylidène ou un copolymère de difluorure de vinylidène et d'au moins un comonomère choisi dans le groupe constitué par des monomères éthyléniques fluorés, des monomères éthyléniques non fluorés et des diènes non fluorés, lesdites particules étant une poudre broyée,
l'agent de nucléation étant sous la forme de particules possédant une taille de particule MV de pas plus de 5 µm (microns), la valeur MV étant la taille moyenne de particule en volume, la distribution volumique étant déterminée en utilisant les calculs de Mie ou de Mie modifiés, ladite taille de particule MV étant mesurée en utilisant un analyseur de taille de particule Microtrac S3500, selon la procédure indiquée dans la description, et
l'agent de nucléation étant un homopolymère de tétrafluoroéthylène ou un copolymère de tétrafluoroéthylène et d'au moins un monomère éthylénique fluoré.

2. Composition de revêtement selon la revendication 1, la composition de revêtement étant de plus composée d'au moins un solvant latent pour le polymère fluoré semi-cristallin.

3. Composition de revêtement selon la revendication 1, la composition de revêtement étant sous la forme d'une poudre sèche, à écoulement libre.

4. Composition de revêtement selon la revendication 1, la composition de revêtement étant sous la forme d'un latex aqueux.

5. Composition de revêtement selon la revendication 1, la composition de revêtement étant de plus composée d'au moins un pigment.

6. Composition de revêtement selon la revendication 1, la composition de revêtement étant composée de 0,01 à 10 % en poids d'agent de nucléation, sur la base du poids total d'agent de nucléation et de polymère fluoré semi-cristallin.

7. Composition de revêtement selon la revendication 1, le polymère acrylique étant présent et le polymère acrylique étant un polymère de monomères qui comprennent un ou plusieurs monomères choisis dans le groupe constitué par un (méth)acrylate de méthyle, un (méth)acrylate d'éthyle et un (méth)acrylate de butyle.

8. Composition de revêtement selon la revendication 1, les particules possédant une taille de particule MV de pas plus de 4 µm (microns).

9. Composition de revêtement selon la revendication 1, l'agent de nucléation possédant un point de fusion supérieur à celui du polymère fluoré semi-cristallin.

10. Composition de revêtement selon la revendication 1, le polymère fluoré semi-cristallin possédant une viscosité à l'état fondu d'au moins 7 Kps à 100 s⁻¹, telle que mesurée selon la norme ASTM D3835 à 232 °C.

11. Revêtement sur un substrat, le revêtement ayant été produit à partir d'une composition de revêtement conformément à la revendication 1.

12. Procédé de préparation d'une composition de revêtement, comprenant le mélangeage d'un latex d'un polymère fluoré semi-cristallin avec un latex d'un agent de nucléation pour obtenir un mélange, la coagulation du mélange pour obtenir un mélange coagulé, le séchage du mélange coagulé pour obtenir une poudre, le broyage de la poudre pour obtenir des particules possédant une taille de particule MV de pas plus de 5 microns, et, éventuellement, le mélangeage des particules broyées avec un polymère acrylique, la valeur MV étant la taille moyenne de particule en volume, la distribution volumique étant déterminée en utilisant les calculs de Mie ou de Mie modifiés, ladite taille de particule MV étant mesurée en utilisant un analyseur de taille de particule Microtrac S3500.

13. Procédé selon la revendication 12, les particules broyées étant de plus mélangées avec un solvant latent pour le polymère fluoré semi-cristallin.

14. Procédé de préparation d'un revêtement sur un substrat, comprenant un stade de cuisson d'un substrat recouvert par une composition de revêtement conformément à la revendication 1.
